# EUROPÄISCHE PATENTSCHRIFT

(11) **EP 0 562 063 B1**
(45) Veröffentlichungstag und Bekanntmachung des Hinweises auf die Patenterteilung: **17.12.1997**
(21) Anmeldenummer: 92918732.6
(22) Anmeldetag: 04.09.1992
(51) Int. Cl.: F02M 37/08, F02D 41/22

(54) **STEUERSYSTEM FÜR DIE ELEKTRISCHE KRAFTSTOFFPUMPE EINER BRENNKRAFTMASCHINE**
CONTROL SYSTEM FOR THE ELECTRIC FUEL PUMP OF AN INTERNAL COMBUSTION ENGINE
SYSTEME DE COMMANDE POUR LA POMPE DE CARBURANT ELECTRIQUE D'UN MOTEUR A COMBUSTION INTERNE

(30) Priorität: 10.10.1991 DE 4133558
(43) Veröffentlichungstag der Anmeldung: 29.09.1993
(73) Patentinhaber: ROBERT BOSCH GMBH, 70442 Stuttgart (DE)
(72) Erfinder: SCHMITZ-HÜBSCH, Axel, D-7148 Remseck 2 (DE); KÖLLE, Ulrich, D-7141 Schwieberdingen (DE); FLÄTGEN, Dietmar, D-7143 Vaihingen (DE)
(86) Internationale Anmeldenummer: DE9200740
(87) Internationale Veröffentlichungsnummer: WO9307376

(56) Entgegenhaltungen:
- DE-A- 1 526 504
- DE-A- 2 514 404
- DE-A- 3 145 732
- DE-A- 3 223 318
- DE-A- 3 610 064
- DE-A- 3 802 101
- DE-A- 3 840 912
- DE-C- 827 137
- GB-A- 2 051 227
- US-A- 2 648 746
- POWER Bd. 132, Nr. 9, 1. September 1988, NEW YORK US Seiten 39 - 42 LOCKNER 'Enhancing prime-mover controls with fault-tolerant systems'

## Beschreibung

### Stand der Technik

Die Erfindung geht aus von einem Steuersystem für die elektrische Kraftstoffpumpe einer Brennkraftmaschine nach dem Oberbegriff des Anspruchs 1. Aus der DE-PS 1 526 504 ist eine Schaltungsanordnung für die Ansteuerung einer Kraftstoffpumpe bei einer Brennkraftmaschine bekannt, bei der unterhalb einer Minimaldrehzahl der Brennkraftmaschine die Stromzufuhr zur Kraftstoffpumpe abgeschaltet wird. Die dort angegebene Erfindung läßt sich von der Überlegung leiten, daß bei eingeschalteter Zündung die Drehzahl einer Brennkraftmaschine nur dann unter Minimalwerte abfällt, wenn die Maschine durch äußere Einwirkung, speziell bei einem Unfall, abgebremst wird. In diesem Fall soll dann aus Sicherheitsgründen die Förderung von Kraftstoff vom Tank in Richtung zur Brennkraftmaschine unterbrochen werden. Darüber hinaus sind in den DE-Offenlegungsschriften 20 65 928 und 22 49 253 Lösungen bekannt geworden, die aus den gleichen obengenannten Gründen die Kraftstoffzufuhr zur Brennkraftmaschine bei Stillstand der Maschine unterbrechen. Dort wird dieser Stillstand der Brennkraftmaschine über eine entsprechende Erfassung des Luftflusses im Ansaugrohr detektiert, indem in Ruhestellung der Luftmengenmeßklappen im Ansaugrohr ein Schalter entsprechend betätigt wird und abhängig von dieser Schalterbetätigung dann auch die Stromzufuhr zur elektrisch angetriebenen Kraftstoffpumpe unterbrochen wird. Selbstverständlich sind für den Startfall geeignete Maßnahmen zu ergreifen, um speziell zu Beginn des Starts diese Sicherheitsfunktion außer Betrieb zu setzen.

Es hat sich nun gezeigt, daß mit den bekannten Lösungen einer Sicherheitsabschaltung der elektrischen Kraftstoffpumpe bei Brennkraftmaschinen Fehlermöglichkeiten auftreten können, die zu einem unberechtigten Ansprechen dieser Sicherheitsabschaltung führen.

Die DE-A-3 145 732 zeigt ein Steuersystem gemäß dem Oberbegriff von Ansprüch 1.

Aufgabe der Erfindung ist es deshalb, ein sicheres und zuverlässiges Abschaltkonzept zu entwickeln und bereitzustellen. Gelöst wird diese Aufgabe mit den Merkmalen des Hauptanspruchs.

### Vorteile der Erfindung

Mit dem Steuersystem für die elektrische Kraftstoffpumpe einer Brennkraftmaschine nach dem Hauptanspruch wird ein hohes Maß an Sicherheit und Zuverlässigkeit eines Kraftstoffpumpen-Abschaltsystems geschaffen, das darüber hinaus relativ einfach zu realisieren ist.

### Zeichnung

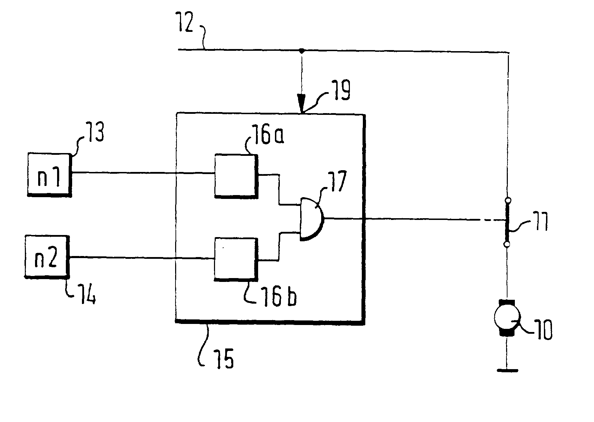

Ein Ausführungsbeispiel der Erfindung ist in der Zeichnung dargestellt und wird im folgenden näher beschrieben und erläutert.

### Beschreibung eines Ausführungsbeispieles

Das Ausführungsbeispiel betrifft ein Steuersystem für die elektrische Kraftstoffpumpe einer Brennkraftmaschine. Dabei ist der Elektromotor der nicht näher dargestellten Kraftstoffpumpe mit 10 bezeichnet. Er erhält seine Versorgungsspannung U_{Batt} über einen Schalter 11 aus einer Versorgungsleitung 12.

Mit 13 ist ein erster Sensor für eine erste Drehzahl bezeichnet, mit 14 ein zweiter Sensor für eine zweite Drehzahl. Im konkreten Fall ist der Sensor 13 der Kurbelwelle der Brennkraftmaschine zugeordnet, der Sensor 14 der Nockenwelle. Ausgangsseitig stehen die beiden Sensoren 13 und 14 mit einem Block 15 in Verbindung, in den symbolhaft je eine Schwellwertabfrage 16a und 16b für die Signale der beiden Sensoren 13 und 14 sowie ein UND-Gatter 17 für die Ausgangssignale der Schwellwertabfragen eingezeichnet ist. Dieses UND-Gatter 17 steuert seinerseits wiederum den Schalter 11 zwischen der Stromversorgungsleitung 12 und dem Elektromotor 10 der Kraftstoffpumpe. Über einen Versorgungsspannungsanschluß 19 ist Block 15 ergänzend mit der Stromversorgungsleitung 12 verbunden.

Grundgedanke der vorliegenden Erfindung ist es nun, den Schalter 11 in Serie zum Elektromotor 10 der Kraftstoffpumpe drehzahlabhängig nur dann zu öffnen, wenn sowohl das Signal vom Sensor 13 als auch das Signal vom Sensor 14 einen minimalen Wert aufweist. Auf diese Weise wird sichergestellt, daß das Kraftfahrzeug bei Ausfall eines der beiden Sensoren 13 oder 14 noch fahrfähig bleibt.

Das in Block 15 eingezeichnete UND-Gatter 17 übernimmt dabei in Verbindung mit den vorgeschalteten Schwellwertabfragen eine an sich bekannte Plausibilitätsabfrage der beiden Signale von den Sensoren 13 und 14 und nur dann, wenn diese beiden Signale zueinander plausibel sind und beide Drehzahlwerte einen wählbaren unteren Wert unterschreiten, wird auch der Schalter 11 geöffnet.

Als besonders zweckmäßig hat sich erwiesen, wenn die beiden Sensoren 13 und 14 unterschiedlichen Wellen der Brennkraftmaschine zugeordnet sind, d.h. Sensor 13 z.B. der Kurbelwelle und Sensor 14 z.B. der Nockenwelle. Selbstverständlich muß die Plausibilitätsabfrage der beiden Ausgangssignale der beiden Sensoren 13 und 14 die unterschiedlichen Absolutwerte bzw. den Zusammenhang zwischen Kurbelwellendrehzahl und Nockenwellendrehzahl berücksichtigen.

Selbstverständlich muß dafür Sorge getragen werden, daß zu Beginn eines Startvorganges die Kraftstoffpumpe auch Kraftstoff fördern kann. Zu diesem Zweck sind Mittel vorgesehen, die zumindest während Phasen des Startvorganges die Plausibilitätsabfrage wirkungslos machen.

Neben einer Abschaltung der Kraftstoffpumpe bei tiefen Drehzahlen läßt sich das erfindungsgemäße Steuersystem auch als Überdrehzahlschutz für die Brennkraftmaschine einsetzen, indem die Stromzufuhr zur Kraftstoffpumpe dann unterbrochen wird, wenn sicherheitskritische Drehzahlen überschritten werden. Auch in diesem Fall kann das System dann ansprechen, wenn die Plausibilitätsabfrage beider Werte der Sensoren 13 und 14 ein Überschreiten einer sicherheitskritischen Drehzahl ergibt.

## Patentansprüche

1. Steuersystem für die elektrische Kraftstoffpumpe einer Brennkraftmaschine mit einem Sensor (13), der die Drehzahl (nl) einer ersten Welle der Brennkraftmaschine ermittelt und mit logischen Mitteln zur Bereitstellung eines Abschaltsignales für die elektrische Kraftstoffpumpe abhängig von der ermittelten Drehzahl, mit einem weiteren Sensor (14), der die Drehzahl (n2) einer zweiten Welle ermittelt, die den logischen Mitteln (16, 17) zugeführt wird, wobei in den logischen Mitteln (16, 17) die beiden ermittelten Drehzahlen mit vorgebbaren Schwellwerten verglichen werden und eine Abschaltung der elektrischen Kraftstoffpumpe nur dann erfolgt, wenn beide Drehzahlsignale einen vorgebbaren plausiblen Bereich verlassen, dadurch gekennzeichnet, daß die erste Welle die Kurbelwelle und die zweite Welle die Nockenwelle der Brennkraftmaschine ist, daß Mittel vorgesehen sind, die zumindest während Phasen eines Startvorgangs die Plausibilitätsabfrage wirkungslos machen und daß die logischen Mittel (16, 17) Schaltmittel (11) ansteueren, mit denen die Stromzufuhr zur elektrischen Kraftstoffpumpe unterbrochen wird, wenn eine Abschaltung durchgeführt werden soll.

2. Steuersystem nach Anspruch 1, dadurch gekennzeichnet, daß der vorgebbare Bereich durch minimale und/oder maximale Drehzahlwerte begrenzt wird.

3. Steuersystem nach einem der vorhergehenden Ansprüche, dadurch gekennzeichnet, daß die minimalen und/oder maximalen Drehzahlwerte so festgelegt sind, daß der Zusammenhang zwischen Kurbelwellendrehzahl und Nockenwellendrehzahl berücksichtigt wird.

## Claims

1. Control system for the electric fuel pump of an internal combustion engine, with a sensor (13) which determines the rotational speed (n1) of a first shaft of the internal combustion engine, and with logic means for supplying a cut-off signal for the electric fuel pump as a function of the rotational speed determined, with a further sensor (14) which determines the rotational speed (n2) of a second shaft which is fed to the logic means (16, 17), the two rotational speeds determined being compared with presettable threshold values in the logic means (16, 17), and a cut-off of the electric fuel pump taking place only when both rotational speed signals leave a presettable plausible range, characterized in that the first shaft is the crankshaft and the second shaft the camshaft of the internal combustion engine, in that means are provided which render the plausibility interrogation ineffective at least during phases of a starting operation, and in that the logic means (16, 17) activate switch means (11), by means of which the supply of current to the electric fuel pump is interrupted when a cut-off is to be carried out.

2. Control system according to Claim 1, characterized in that the presettable range is limited by minimum and/or maximum rotational speed values.

3. Control system according to one of the preceding claims, characterized in that the minimum and/or maximum rotational speed values are fixed in such a way that the relation between rotational speed of the crankshaft and rotational speed of the. camshaft is taken into account.

## Revendications

1. Système de commande d'une pompe électrique à carburant d'un moteur à combustion interne comprenant :
• un capteur (13) qui détermine la vitesse de rotation (nl) d'un premier arbre du moteur à combustion interne, et
• des moyens logiques pour fournir un signal de coupure pour la pompe électrique de carburant en fonction de la vitesse de rotation obtenue,
• un second capteur (14) qui détermine la vitesse de rotation (n2) d'un second arbre pour la fournir à des moyens logiques (16, 17), les moyens logiques (16, 17) comparant les deux vitesses de rotation obtenues avec des seuils prédéterminés et produisant une coupure de la pompe électrique de carburant seulement si les deux signaux de vitesse de rotation s'écartent d'une plage plausible prédéterminée,
caractérisé en ce que
• le premier arbre est le vilebrequin et le second arbre est l'arbre à came du moteur à combustion interne,
• des moyens sont prévus qui, au moins pendant les phases d'une opération de démarrage inhibent l'interrogation de plausibilité, et
• les moyens logiques (16, 17) commandent le moyen de commutation (11) qui interrompt l'alimentation électrique de la pompe électrique de carburant lorsqu'il faut effectuer la coupure.

2. Système de commande selon la revendication 1,
caractérisé en ce que
la plage prédéterminé est limitée par les valeurs de vitesse de rotation minimale et/ou maximale.

3. Système de commande selon l'une des revendications précédentes,
caractérisé en ce que
les vitesses de rotation minimales et/ou maximales sont fixées pour tenir compte de la relation entre la vitesse de rotation du vilebrequin et celle de l'arbre à came.
